(19) Europäisches Patentamt / European Patent Office / Office européen des brevets

(11) **EP 4 202 218 A1**

(12) **EUROPEAN PATENT APPLICATION**

(43) Date of publication:
**28.06.2023  Bulletin 2023/26**

(21) Application number: **21383202.5**

(22) Date of filing: **23.12.2021**

(51) International Patent Classification (IPC):
**F03D 17/00** *(2016.01)*      **F03D 7/02** *(2006.01)*

(52) Cooperative Patent Classification (CPC):
**F03D 17/00; F03D 7/0224;** F05B 2270/331

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Siemens Gamesa Renewable Energy
Innovation &
Technology S.L.
31621 Sarriguren (Navarra) (ES)**

(72) Inventor: **The designation of the inventor has not
yet been filed**

(74) Representative: **SGRE-Association
Siemens Gamesa Renewable
Energy GmbH & Co KG
Schlierseestraße 28
81539 München (DE)**

(54)  **METHOD OF DETERMINING AN OUT-OF-PLANE BENDING MOMENT ENVELOPE OF A WIND
TURBINE BLADE**

(57)    It is described a method of determining an out-of-plane bending moment envelope of at least one blade (6) of a wind turbine (1) comprising a tower (2), a nacelle (3) being mounted rotatable about the longitudinal axis of tower (2) mounted on a rigid or moving foundation, a hub (4) being mounted rotatable about a rotation axis (8) to the nacelle (3), and the blade (6) being mounted to the hub (4). The method comprises determining or measuring a shaft tilt bending moment and a shaft yaw bending moment; determining an oscillatory bending moment component, which acts on the section of the blade (6), based on the shaft tilt bending moment and/or the shaft yaw bending moment; determining a mean out-of-plane bending moment component, which acts on a section of the blade (6), from a model of the wind turbine (1) exposed to and interacting with the wind inflow; and superposing the oscillatory bending moment component on the mean bending moment component to obtain an upper envelope and a lower envelope of the out-of-plane bending moment.

FIG 1

EP 4 202 218 A1

**Description**

Field of invention

The present invention relates to a method and a device of determining an out-of-plane bending moment envelope of at least one blade of a wind turbine.

Summary of the Invention

There may be a need for an improved method and a device of estimating and controlling the loads of a wind turbine. This need may be met by the subject matters according to the independent claims. The present invention is further developed as set forth in the dependent claims.

According to the invention, a method and a device of determining an out-of-plane bending moment envelope of at least one blade of a wind turbine are provided. The wind turbine comprises a tower, a nacelle being mounted rotatable about the longitudinal axis of the tower mounted on a rigid or moving foundation, a hub being mounted rotatable about a rotation axis to the nacelle, and the blade being mounted to the hub. The out-of-plane bending moment is a bending moment which acts on a section perpendicular to the length axis of the blade. The method comprises steps of determining or measuring a shaft tilt bending moment and a shaft yaw bending moment, wherein the shaft tilt bending moment is a moment which acts on the shaft being mounted rotatable about a rotation axis and connected to the hub about a tilt axis in a fixed-frame reference, which shaft can be deformed relative to the tilt axis, and wherein the shaft yaw bending moment is a moment which acts on the shaft connected to the hub about a yaw axis in the fixed-frame reference, which shaft can be deformed relative to the yaw axis; determining an oscillatory bending moment component, which acts on the section of the blade, based on the shaft tilt bending moment and/or the shaft yaw bending moment; determining a mean out-of-plane bending moment component, which acts on the section of the blade, from a model of the wind turbine exposed to and interacting with the wind inflow; and superposing the oscillatory bending moment component on the mean bending moment component to obtain an upper envelope and a lower envelope of the out-of-plane bending moment.

In an embodiment, a part of oscillatory bending moment component is calculated by a, preferably narrow, bandpass with a center-frequency of a three-times rotor periodic sampling frequency applied to the shaft-tilt bending moment and/or the shaft-yaw bending moment time series being converted into two sinusoidal components applied for (3+/-1) times rotor periodic frequency component of the out of plane bending moment. Preferably, a part of oscillatory bending moment component is calculated by a, preferably narrow, bandpass with a center-frequency of (a) whole number multiples of the three-times rotor periodic sampling frequency applied to the shaft-tilt bending moment and/or the shaft-yaw bending moment time series which are converted into two sinusoidal components applied for whole number multiples of (3+/-1) times rotor periodic frequency component of the out of plane bending moment.

In an embodiment, the model of the wind turbine exposed to and interacting with the wind inflow includes a model of one or more blades representing its structural, geometrical aerodynamic properties and has at least one parameter as a time-dependent input, which is selected from a group comprising a hub rotational speed, a blade azimuth angle, a wind speed, a blade pitch angle, a blade pitch rate, a yaw angle, a yaw rate, a yaw acceleration, an air density, a nacelle acceleration, a nacelle angular velocity, and a nacelle inclination.

In an embodiment, a modal equilibrium state $q_0$ of a wind turbine model is defined by a zero-sum of generalized forces for internal strains $F_{gen,intr}$ inertia $F_{gen,inert}$, gravity $F_{gen,grav}$ and external loads due to aerodynamic exposure $F_{gen,aero}$ the latter one depending on the tip-speed-ratio $\lambda_{rat}$ and pitch angle $\theta_{rat}$ at rated conditions, all of which dedicated to six modal shapes in total:

$$\begin{bmatrix} F_{gen,int,01} \\ F_{gen,int,02} \\ \vdots \\ F_{gen,int,06} \end{bmatrix} + K_{\text{gen,int}} \begin{bmatrix} q_{01} \\ q_{02} \\ \vdots \\ q_{06} \end{bmatrix} - \left( \begin{bmatrix} F_{gen,grav,1} \\ F_{gen,grav,2} \\ \vdots \\ F_{gen,grav,6} \end{bmatrix} + \begin{bmatrix} F_{gen,inert,1} \\ F_{gen,inert,2} \\ \vdots \\ F_{gen,inert,6} \end{bmatrix} + \rho\, v_{w,rated}^2 \begin{bmatrix} F_{gen,aero,\theta_{rat},\lambda_{rat},1} \\ F_{gen,aero,\theta_{rat},\lambda_{rat},2} \\ \vdots \\ F_{gen,aero,\theta_{rat},\lambda_{rat},6} \end{bmatrix} \right) = 0$$

In this embodiment, the blade is discretized by a kinematic chain of beam elements with defined structural properties for each element. The out-of-plane moment estimate for a blade section reference system is approximated by the sum of elementwise moments by the sum of inertia, aerodynamic and gravity reaction moments.

The gravity reaction moments on a blade reference section are approximated by the sum of elementwise moments, each of them represented by a function $f(q,\beta,\theta,\psi, ...)$ in dependence of at least the difference of the modal states $q - q_0$ to the equilibrium state, the tower top inclination $\beta$, the pitch angle $\theta$ and the rotor azimuth $\psi$.

The inertial reaction moments on a blade reference section are approximated by the sum of elementwise moments, each of them represented by a function $f\left(q, \omega, \omega^2, \theta, \frac{\partial \theta}{\partial t}, \ldots\right)$ in dependence of at least the difference of the modal states $q - q_0$ to the equilibrium state, the rotational speed of the rotor shaft $\omega$ and its square $\omega^2$, the pitch angle $\theta$ and its derivative by time $\frac{\partial \theta}{\partial t}$.

The aerodynamic reaction moments on a blade reference section are approximated by the sum of elementwise moments, each of them represented by a function $f\left(q, \lambda, \theta, \frac{\partial \theta}{\partial t}, c_L, c_D, c_M \ldots\right)$ in dependence of at least the difference of the modal states $q - q_0$ to the equilibrium state, the tip-speed-ratio $\lambda$, the pitch angle $\theta$ its derivative by time $\frac{\partial \theta}{\partial t}$ and the aerodynamic coefficients for Lift $c_L$, Drag $c_D$ and Moment $c_M$.

In an embodiment, the model of the wind turbine is also used to determine a full set of moments and forces in a section of the blade. The full set can include three forces and three moments in a three-dimensional coordinate system.

In an embodiment, the wind turbine comprises a plurality of blades, wherein the method further comprises a step of estimating an in-plane-bending moment of a section of each blade and summing-up the mean blade section in-plane bending moments of all blades to obtain a shaft input torque of the wind turbine.

In an embodiment, the shaft input torque is used to determine a wind speed by means of the theoretical model of a wind turbine model.

The estimated blade loads can be used as a condition for triggering an individual pitch control strategy. When individual pitch control is not enough to get load at a desired level, a collective pitch increment can be activated. For this purpose, a loads estimator and a control strategy can be used.

The present invention can be used to estimate the wind speed averaged in the rotor surface taking into account the mean blade in plane bending moment and the shaft dynamics.

It has to be noted that embodiments of the invention have been described with reference to different subject matters. In particular, some embodiments have been described with reference to apparatus type claims whereas other embodiments have been described with reference to method type claims. However, a person skilled in the art will gather from the above and the following description that, unless other notified, in addition to any combination of features belonging to one type of subject matter also any combination between features relating to different subject matters, in particular between features of the apparatus type claims and features of the method type claims is considered as to be disclosed with this application.

Brief Description of the Drawings

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

Fig. 1    shows a wind turbine and the different elements thereof;

Fig. 2    shows the effect of an out-of-plane bending moment according to an embodiment;

Fig. 3    a sideview of a main shaft together with a fixed-frame reference according to an embodiment;

Fig. 4    a schematic top view of a main shaft together with a fixed-frame reference according to an embodiment;

Fig. 5    shows upper and lower envelopes of the out-of-plane bending moment according to an embodiment;

Fig. 6    shows a blade according to an embodiment;

Fig. 7    a calculation concept according to an embodiment.

Detailed Description

The illustrations in the drawings are schematically. It is noted that in different figures, similar or identical elements are provided with the same reference signs.

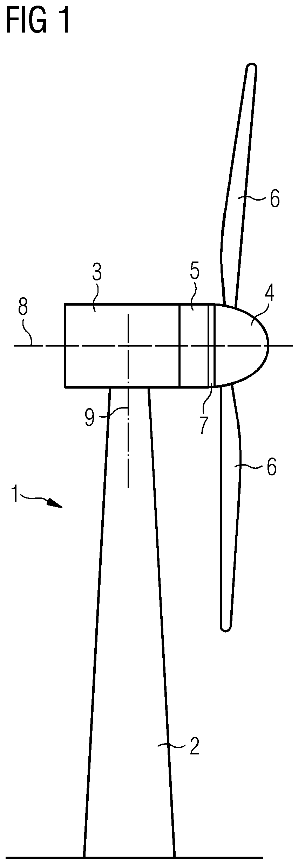

**Fig. 1** shows a wind turbine 1. The wind turbine 1 comprises a nacelle 3 and a tower 2. The nacelle 3 is mounted at the top of the tower 2. The nacelle 3 is mounted rotatable with regard to the tower 2 by means of a yaw bearing. The axis of rotation of the nacelle 3 with regard to the tower 2 is referred to as a yaw axis 9.

The wind turbine 1 also comprises a hub 4 with three rotor blades 6 (of which two rotor blades 6 are depicted in Fig. 1). The hub 4 is mounted rotatable with regard to the nacelle 3 by means of a main bearing 7. The hub 4 is connected to a shaft and is mounted rotatable about a rotor axis of rotation 8.

The wind turbine 1 furthermore comprises a generator 5. The generator 5 in turn comprises a rotor connecting the generator 5 with the hub 4. If the hub 4 is connected directly to the generator 5, the wind turbine 1 is referred to as a gear-less, direct-driven wind turbine. Such a generator 5 is referred as direct drive generator 5. As an alternative, the hub 4 may also be connected to the generator 5 via a gear box. This type of wind turbine 1 is referred to as a geared wind turbine. The present invention is suitable for both types of wind turbines 1.

The generator 5 is accommodated within the nacelle 3. The generator 5 is arranged and prepared for converting the rotational energy from the hub 4 into electrical energy in the shape of an AC power.

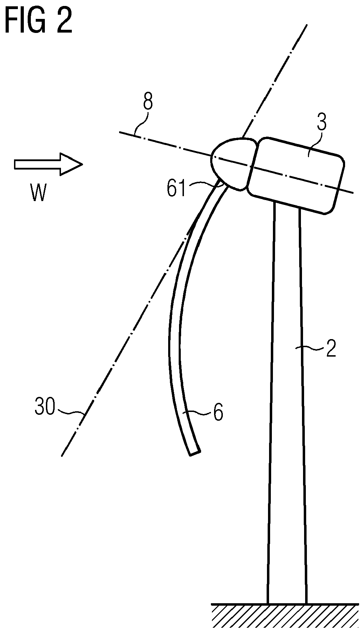

**Fig. 2** shows the effect of an out-of-plane bending moment envelope according to an embodiment. The out-of-plane bending moment is a bending moment which acts on a section 61 perpendicular to the length axis 30 of the blade 6.

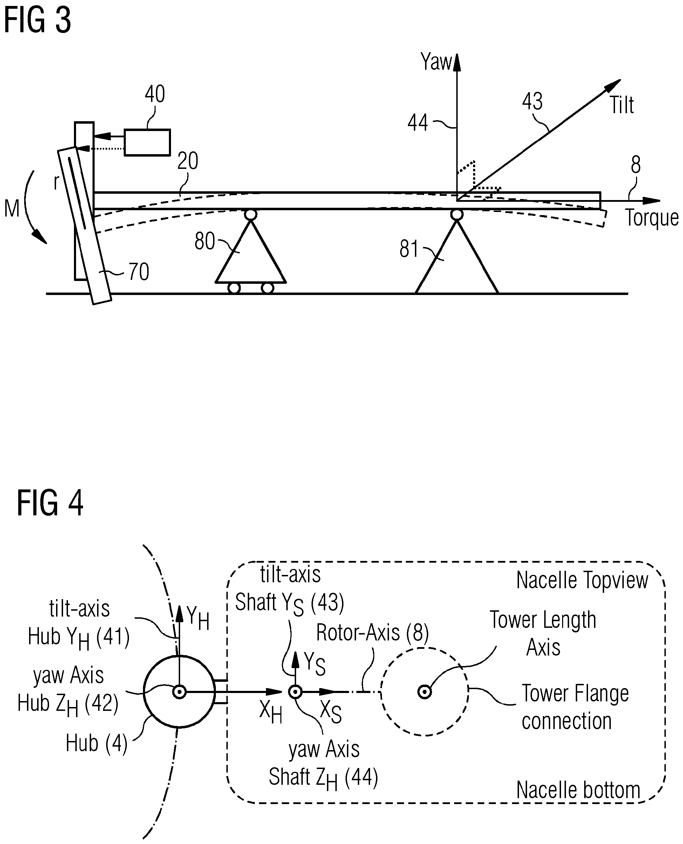

**Figures 3** and **4** show a sideview and a schematic top view, respectively, of a main shaft together with a fixed-frame reference according to an embodiment.

The method comprises a step of determining or measuring a shaft tilt bending moment and a shaft yaw bending moment, wherein the shaft tilt bending moment is a moment which acts on a shaft 20 being mounted rotatable about the rotation axis 8 and connected to the hub 4 about a tilt axis 43 in a fixed-frame reference 43, 44. The shaft 20 can be deformed relative to the tilt axis 43. The shaft yaw bending moment is a moment which acts on the shaft 20 connected to the hub 4 about a yaw axis 4) in the fixed-frame reference 43, 44, which shaft (20) can be deformed relative to the yaw axis 44. The fixed-frame reference 43, 44 is thus defined by the tilt axis 43 and the yaw axis 44 perpendicular thereto.

The shaft 20 is supported by bearings 80, 81 and can be deformed relative to the tilt axis 43 and the yaw axis 44 in the fixed-frame reference 43, 44.

A flange 70 is connected to the main shaft 20. The hub 4 is connected to the flange 70. Sensors 40 such as inductive distance sensors measure a distance to the rotating flange 70. The shaft tilt bending moment and the shaft yaw bending moment can be derived from the measured distances.

In Fig. 4, reference signs 41, 42 designate a local coordinate system of the hub 4.

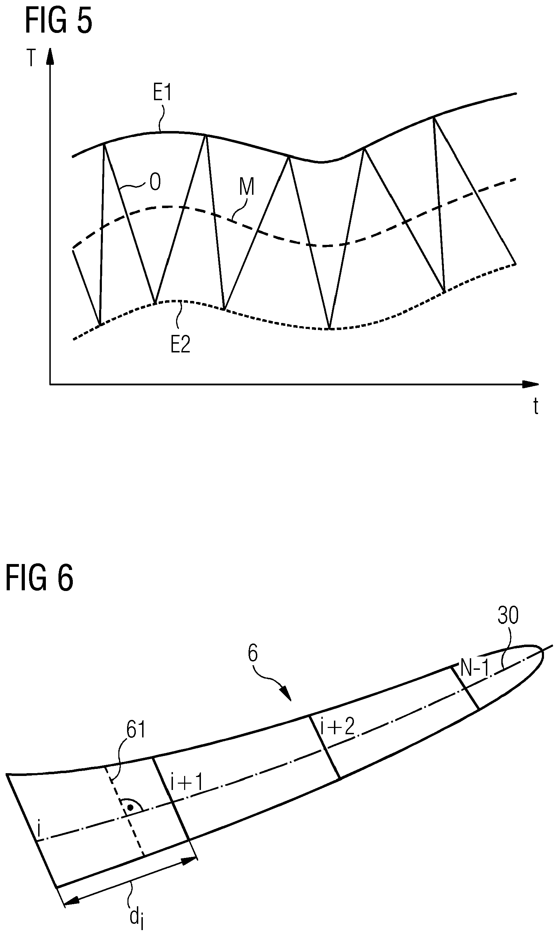

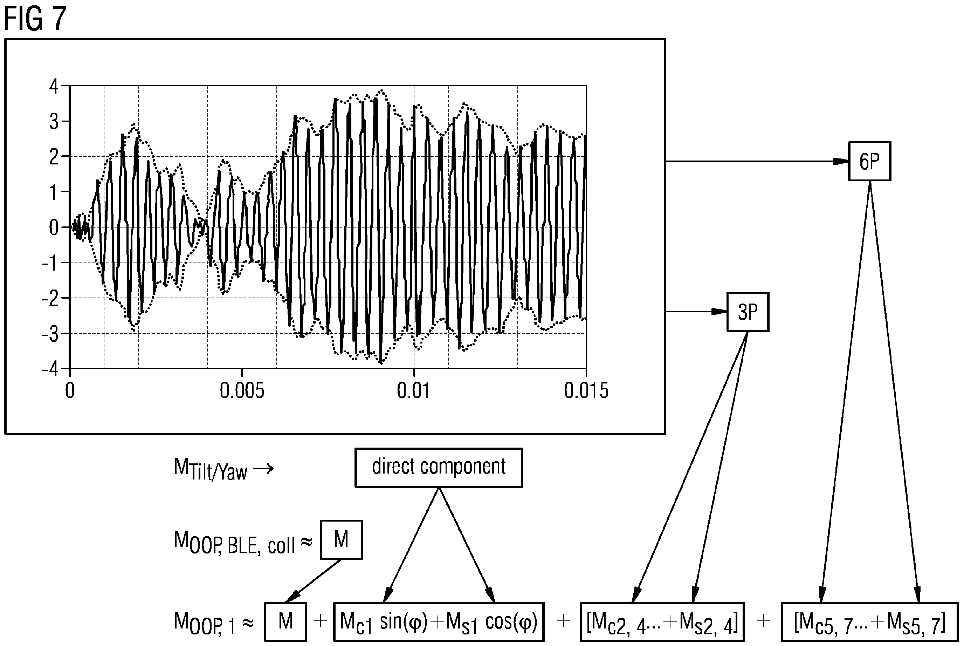

**Fig. 5** shows upper and lower envelopes of the out-of-plane bending moment envelope according to an embodiment, **Fig. 6** shows a blade 6 according to an embodiment, and **Fig. 7** shows a calculation concept according to an embodiment.

The method further comprises steps of determining an oscillatory bending moment component O, which acts on the section 61 of the blade 6, based on the shaft tilt bending moment and/or the shaft yaw bending moment; determining a mean out-of-plane bending moment component M, which acts on the section 61 of the blade 6, from a model of the wind turbine 1 exposed to and interacting with the wind inflow W; and superposing the oscillatory bending moment component O on the mean bending moment component M to obtain an upper envelope E1 and a lower envelope E2 of the out-of-plane bending moment.

A part of oscillatory bending moment component O can be calculated by signal processing of the shaft tilt bending moment and/or the shaft yaw bending moment time series.

The model of the wind turbine 1 exposed to and interacting with the wind inflow W can include a model of one or more blades 6 representing its structural, geometrical aerodynamic properties and has at least one parameter as a time-dependent input, which is selected from a group comprising a hub rotational speed, a blade azimuth angle, a wind speed, a blade pitch angle, a blade pitch rate, a yaw angle, a yaw rate, a yaw acceleration, an air density, a nacelle acceleration, a nacelle angular velocity, and a nacelle inclination.

The model of the wind turbine 1 can also be used to determine a full set of moments and forces in a section of the blade 6. The full set can include three forces and three moments in a three-dimensional coordinate system.

The wind turbine 1 comprises the plurality of blades 6, wherein the method further comprises a step of estimating an in-plane-bending moment of a section 61 of each blade 6 and summing-up the mean blade section in-plane bending moments of all blades 6 to obtain a shaft input torque of the wind turbine 1. The shaft input torque can be used to determine a wind speed W by means of the theoretical model of a wind turbine model.

In the example of Fig. 5, an oscillatory component E1, E2 of the base signal O of a tilt or yaw moment can be approximated by a bandpass-transfer-function centered around (a multiple of) three of the rotorperiodic sampling frequency.

The magnitude of the oscillatory component E1, E2 of Fig. 5 can be estimated by an approximation of a Hilbert-transform of the bandpass-filtered-signal centered around (a multiple of) three of the rotorperiodic sampling frequency.

Fig. 7 shows the calculation concept according to an embodiment. The graph on top describes an output signal after a bandpass filter process. Approximation of a blade individual moment (for three blades mounted every 120° of the rotor) by a Fourier series of a direct component and sinusoidal components of (multiples) of the periodic sampling frequency in the tilt/yaw bending moment:

$$OOP1(\varphi) \approx M + Mc1\cos(\varphi) + Ms1\sin(\varphi) + Mc2\cos(2\varphi) + Ms2\sin(2\varphi) + Ms3\sin(3\varphi) + Mc3\cos(3\varphi) + Ms4\sin(4\varphi)$$
$$+ Mc4\cos(4\varphi) + \text{Higher order terms}$$

$$OOP2(\varphi) \approx M + Mc1\cos\left(\varphi + \frac{2\pi}{3}\right) + Ms1\sin\left(\varphi + \frac{2\pi}{3}\right) + Mc2\cos\left(2\varphi + \frac{2\pi}{3}\right) + Ms2\sin\left(2\varphi + \frac{2\pi}{3}\right) + Ms3\sin\left(3\varphi + \frac{2\pi}{3}\right) + Mc3\cos\left(3\varphi + \frac{2\pi}{3}\right)$$
$$+ Ms4\sin\left(4\varphi + \frac{2\pi}{3}\right) + Mc4\cos\left(4\varphi + \frac{2\pi}{3}\right) + \text{Higher Order Terms}$$

$$OOP3(\varphi) \approx M + Mc1\cos\left(\varphi + \frac{4\pi}{3}\right) + Ms1\sin\left(\varphi + \frac{4\pi}{3}\right) + Mc2\cos\left(2\varphi + \frac{4\pi}{3}\right) + Ms2\sin\left(2\varphi + \frac{4\pi}{3}\right) + Ms3\sin\left(3\varphi + \frac{4\pi}{3}\right) + Mc3\cos\left(3\varphi + \frac{4\pi}{3}\right)$$
$$+ Ms4\sin\left(4\varphi + \frac{4\pi}{3}\right) + Mc4\cos\left(4\varphi + \frac{4\pi}{3}\right) + \text{Higher Order Terms}$$

$$\begin{bmatrix} M_{tilt} - M_{tilt\_grav} \\ M_{yaw} \end{bmatrix} \approx \begin{bmatrix} \cos(\varphi) & \cos\left(\varphi + \frac{2\pi}{3}\right) & \cos\left(\varphi + \frac{4\pi}{3}\right) \\ \sin(\varphi) & \sin\left(\varphi + \frac{2\pi}{3}\right) & \sin\left(\varphi + \frac{4\pi}{3}\right) \end{bmatrix} \begin{bmatrix} OOP1(\varphi) \\ OOP2(\varphi) \\ OOP3(\varphi) \end{bmatrix}$$

$$\approx \begin{bmatrix} \underbrace{\frac{3\,Mc1}{2}}_{\substack{\text{2x1 terms} \\ \text{related} \\ \text{to 1P in blade}}} + \underbrace{Ms2\,\frac{3\sin(3\varphi)}{2} + Ms4\,\frac{3\sin(3\varphi)}{2} + Mc2\,\frac{3\cos(3\varphi)}{2} + Mc4\,\frac{3\cos(3\varphi)}{2}}_{} \\ \frac{3\,Ms1}{2} + \underbrace{Mc2\,\frac{3\sin(3\varphi)}{2} - Mc4\,\frac{3\sin(3\varphi)}{2} + Ms4\,\frac{3\cos(3\varphi)}{2} - Ms2\,\frac{3\cos(3\varphi)}{2}}_{\text{2 x 4 terms related to the 3P component in blade system}} \end{bmatrix}$$

In practice, the 0P component in the last equation can be calculated via low pass filtering of the tiltmoment signal and be used to modulate the 1P component in the OOP, while the 3P coefficients can be approximated by a Hilbert Transform of the bandpass-filtered-signal centered around the 3P component of the tilt moment signal and be used to modulate the 2P and 4P components in the OOP. The 3P component of the out-of-plane bending moment does not have a representation in the tilt/yaw bending moment, and Mtilt_grav is a representation of the static gravity component (only applicable for tilt direction).

List of symbols and abbreviations:

$q_0$ - vector of modal coordinates which defines a stationary equilibrium at a predefined condition (for example at operation at rated wind speed)

$q$ - vector of actual modal coordinates

$F_{gen,int}$, $F_{gen,inert}$, $F_{gen,grav}$ - vector of generalized internal, inertial and gravity forces

$F_{gen,aero}$ - vector of generalized aerodynamic forces depending on local depending on the current blade deformation state, the aerodynamic properties concern lift and drag, moment coefficients $c_L, c_D, c_M$, tip-speed-ratio $\lambda_{rat}$ and the pitch angle $\upsilon_{rat}$

$K_{gen,int}$ -Stiffness Matrix with respect to modal displacements $q$

$\omega$ - rotational speed of rotor shaft, connected to hub, connected to rotor blades 6

$\beta$ - tower top inclination in tilt $\beta_y$ and roll $\beta_x$ direction

1P- 1 times rotor periodic sampling frequency

3P- 3 times rotor periodic sampling frequency

OOP - Out of Plane

INP - In Plane

It should be noted that the term "comprising" does not exclude other elements or steps and "a" or "an" does not exclude a plurality. Also elements described in association with different embodiments may be combined. It should also be noted that reference signs in the claims should not be construed as limiting the scope of the claims.

**Claims**

1.  A method of determining an out-of-plane bending moment envelope of at least one blade (6) of a wind turbine (1), the wind turbine (1) comprising a tower (2), a nacelle (3) being mounted rotatable about the longitudinal axis of the tower (2), which is mounted on a rigid or moving foundation, a hub (4) being mounted rotatable about a rotation axis (8) to the nacelle (3), and the blade (6) being mounted to the hub (4);
    wherein the out-of-plane bending moment is a bending moment which acts on a section (61) perpendicular to the length axis (30) of the blade (6), the method comprising:

    determining or measuring a shaft tilt bending moment and a shaft yaw bending moment, wherein the shaft tilt bending moment is a moment which acts on the shaft (20) being mounted rotatable about a rotation axis (8) and connected to the hub (4) about a tilt axis (43) in a fixed-frame reference (43, 44), which shaft (20) can be deformed relative to the tilt axis (43), and wherein the shaft yaw bending moment is a moment which acts on the shaft (20) connected to the hub (4) about a yaw axis (44) in the fixed-frame reference (43, 44), which shaft (20) can be deformed relative to the yaw axis (44) ;
    determining an oscillatory bending moment component (O), which acts on the section (61) of the blade (6), based on the shaft tilt bending moment and/or the shaft yaw bending moment;
    determining a mean out-of-plane bending moment component (M), which acts on the section (61) of the blade (6), from a model of the wind turbine (1) exposed to and interacting with the wind inflow (W);
    superposing the oscillatory bending moment component (O) on the mean bending moment component (M) to obtain an upper envelope (E1) and a lower envelope (E2) of the out-of-plane bending moment.

2.  The method according to the preceding claim, wherein
    a part of oscillatory bending moment component (O) is calculated by a bandpass with a center-frequency of a three-times rotor periodic sampling frequency applied to the shaft tilt bending moment and/or the shaft yaw bending moment time series being converted into two sinusoidal components applied for (3+/-1) times rotor periodic frequency component of the out of plane bending moment.

3.  The method according to the preceding claim, wherein
    a part of oscillatory bending moment component (O) is calculated by a bandpass with a center-frequency of a whole number multiples of the three-times rotor periodic sampling frequency applied to the shaft-tilt bending moment and/or the shaft-yaw bending moment time series which are converted into two sinusoidal components applied for whole number multiples of (3+/-1) times rotor periodic frequency component of the out of plane bending moment.

4.  The method according to any one of the preceding claims, wherein
    the model of the wind turbine (1) exposed to and interacting with the wind inflow (W) includes a model of one or more blades (6) representing its structural, geometrical aerodynamic and has at least one parameter as a time-dependent input, which is selected from a group comprising a hub rotational speed, a blade azimuth angle, a wind speed, a blade pitch angle, a blade pitch rate, a yaw angle, a yaw rate, a yaw acceleration, an air density, a nacelle acceleration, a nacelle angular velocity, and a nacelle inclination.

5.  The method according to any of the preceding claims, wherein
    the model of the wind turbine (1) is also used to determine a full set of moments and forces in a section of the blade (6).

6.  The method according to any one of the preceding claims, wherein

the wind turbine (1) comprises a plurality of blades (6), wherein the method further comprises a step of: estimating an in-plane-bending moment of a section (61) of each blade (6) and summing-up the mean blade section in-plane bending moments of all blades (6) to obtain a shaft input torque of the wind turbine (1).

7. The method according to the preceding claim, wherein the shaft input torque is used to determine a wind speed (W) by means of the theoretical model of a wind turbine model.

8. A device for determining an out-of-plane bending moment envelope of at least one blade (6) of a wind turbine (1), the wind turbine (1) comprising a tower (2), a nacelle (3) being mounted rotatable about the longitudinal axis of the tower (2), which is mounted on a rigid or moving foundation, a hub (4) being mounted rotatable about a rotation axis (8) to the nacelle (3), and the blade (6) being mounted to the hub (4);
wherein the out-of-plane bending moment envelope is a bending moment which acts on a section (61) perpendicular to the length axis (30) of the blade (6), the device comprising:

a determining/measuring unit configured to determine or measure a shaft tilt bending moment and a shaft yaw bending moment, wherein the shaft tilt bending moment is a moment which acts on the shaft (20) being mounted rotatable about a rotation axis (8) and connected to the hub (4) about the tilt axis in a fixed-frame reference (43) which could be deformed (11) relative to the tilt axis (43), and wherein the shaft yaw bending moment is a moment which acts on the shaft (20) connected to the hub (4) about the yaw axis in a fixed-frame reference (44) which could be deformed (11) relative to the yaw axis (44);
a first determining unit configured to determine an oscillatory bending moment component (O), which acts on the section (61) of the blade (6), based on the shaft tilt bending moment and/or the shaft yaw bending moment;
a second determining unit configured to determine a mean out-of-plane bending moment component (M), which acts on the section (61) of the blade (6), from a model of the wind turbine (1) exposed to and interacting with the wind inflow (W) ;
a superposing unit configured to superpose the oscillatory bending moment component (O) on the mean bending moment component (M) to obtain an upper envelope (E1) and a lower envelope (E2) of the out-of-plane bending moment.

FIG 1

FIG 2

FIG 3

FIG 4

## FIG 5

## FIG 6

FIG 7

$M_{Tilt/Yaw} \rightarrow$

$M_{OOP, BLE, coll} \approx \boxed{M}$

$M_{OOP, 1} \approx \boxed{M} + \boxed{M_{c1} \sin(\varphi) + M_{s1} \cos(\varphi)} + \boxed{[M_{c2, 4}...+M_{s2, 4}]} + \boxed{[M_{c5, 7}...+M_{s5, 7}]}$

direct component

3P

6P

EP 4 202 218 A1

Europäisches
Patentamt

European
Patent Office

Office européen
des brevets

**EUROPEAN SEARCH REPORT**

Application Number

EP 21 38 3202

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2009/129924 A1 (REBSDORF ANDERS [DK] ET AL) 21 May 2009 (2009-05-21) * figures 4, 10 * * paragraphs [0008] – [0010], [0060] – [0062] * | 1-8 | INV. F03D17/00 F03D7/02 |
| A | YANG FAN ET AL: "Individual pitch control based on the fixed coordinate system shaft load", 2016 35TH CHINESE CONTROL CONFERENCE (CCC), TCCT, 27 July 2016 (2016-07-27), pages 8514-8517, XP032952767, DOI: 10.1109/CHICC.2016.7554716 [retrieved on 2016-08-26] * abstract * | 1-8 | |

TECHNICAL FIELDS
SEARCHED (IPC)

F03D

The present search report has been drawn up for all claims

| Place of search | Date of completion of the search | Examiner |
|---|---|---|
| The Hague | 3 June 2022 | Altmann, Thomas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 21 38 3202

This annex lists the patent family members relating to the patent documents cited in the above-mentioned European search report.
The members are as contained in the European Patent Office EDP file on
The European Patent Office is in no way liable for these particulars which are merely given for the purpose of information.

03-06-2022

| Patent document cited in search report | | Publication date | Patent family member(s) | | Publication date |
|---|---|---|---|---|---|
| US 2009129924 | A1 | 21-05-2009 | CN 101435408 | A | 20-05-2009 |
| | | | DK 2060785 | T3 | 15-04-2019 |
| | | | EP 2060785 | A1 | 20-05-2009 |
| | | | ES 2723877 | T3 | 03-09-2019 |
| | | | US 2009129924 | A1 | 21-05-2009 |

EPO FORM P0459

For more details about this annex : see Official Journal of the European Patent Office, No. 12/82